# EUROPEAN PATENT SPECIFICATION

(11) **EP 2 475 919 B1**
(45) Date of publication and mention of the grant of the patent: **31.07.2013**
(21) Application number: 10760050.4
(22) Date of filing: 07.09.2010
(51) Int. Cl.: F16K 31/40

(54) **SOLENOID VALVE ASSEMBLY FOR CONTROLLING THE FLOW OF FLUID, PARTICULARLY FOR WASHING MACHINES**
MAGNETVENTILANORDNUNG ZUR STEUERUNG DES FLUSSES EINER FLÜSSIGKEIT, IM BESONDEREN FÜR WASCHMASCHINEN
ENSEMBLE ELECTROVANNE POUR REGLER UN ECOULEMENT DE FLUIDE, EN PARTICULIER DANS DES MACHINES A LAVER

(30) Priority: 09.09.2009 IT TO20090691
(43) Date of publication of application: 18.07.2012
(73) Proprietor: ELBI International S.p.A., 10129 Torino (IT)
(72) Inventor: DA PONT, Paolo, I-10123 Torino (IT); CAPIZZI, Giosué, I-10090 BUTTIGLIERA ALTA (Torino) (IT); RAVEDATI, Paolo, I-10024 MONCALIERI (Torino) (IT); RENDESI, Maurizio, I-10090 VILLARBASSE (Torino) (IT); BOSIO, Roberto, I-10141 Torino (IT); DAVI, Massimo, I-10053 BUSSOLENO (Torino) (IT); PARIS, Fabrizio, I-10040 DRUENTO (Torino) (IT)
(74) Representative: Quinterno, Giuseppe
(86) International application number: PCT/IB2010/054009
(87) International publication number: WO 2011/030279

(56) References cited:
- EP-A1- 0 345 382
- DE-A1- 3 540 997
- DE-U1- 29 607 737

## Description

The present invention relates to a valve assembly for controlling a flow of fluid, particularly for washing machines.

More specifically the subject of the invention is a valve assembly of the type comprising
a valve body with an inlet port and an outlet port for the fluid, between which there is defined a main valve seat intended to cooperate with an associated main obturator, said main obturator defining together with the valve body, a (first) variable volume control chamber which is in permanent communication with the inlet port through at least one first passage having a reduced cross-section; said control chamber being adapted to be brought into communication with the outlet port through a second passage having an increased cross-section; and
a solenoid pilot valve including a control coil and a movable core associated with an auxiliary obturator which is adapted to open and close said second passage.

A valve assembly of this kind is disclosed for example in British patent GB-2 296 075 by the same applicant; DE 296 07 737 U1 discloses a valve assembly according to the preamble of the independent claim.

One object of the present invention is to provide a valve assembly of this kind in which the control coil of the solenoid pilot valve can also be positioned at a certain distance from the valve body, and in which more than one moveable core, and therefore more than one valve, can if desired be controlled by an electromagnetic circuit controlled by means of a single coil.

This object and others are achieved according to the invention with a valve assembly of the kind specified above, characterized in that in the valve body between the abovementioned second passage and the outlet port there is defined a second variable volume control chamber, which is delimited in part by the auxiliary obturator, and in that the movable core associated with said auxiliary obturator is mounted out of the flow-path of said fluid. Other features and advantages of the invention will be made clear by the following detailed description, which is given purely by way of non-restrictive example, with reference to the appended drawings, in which:
Figure 1 is a partial view in section of a valve assembly according to the invention;
Figure 2 is a cross-section through another valve assembly according to the invention; and
Figure 3 is a cross-section on plane III-III as marked in Figure 2.

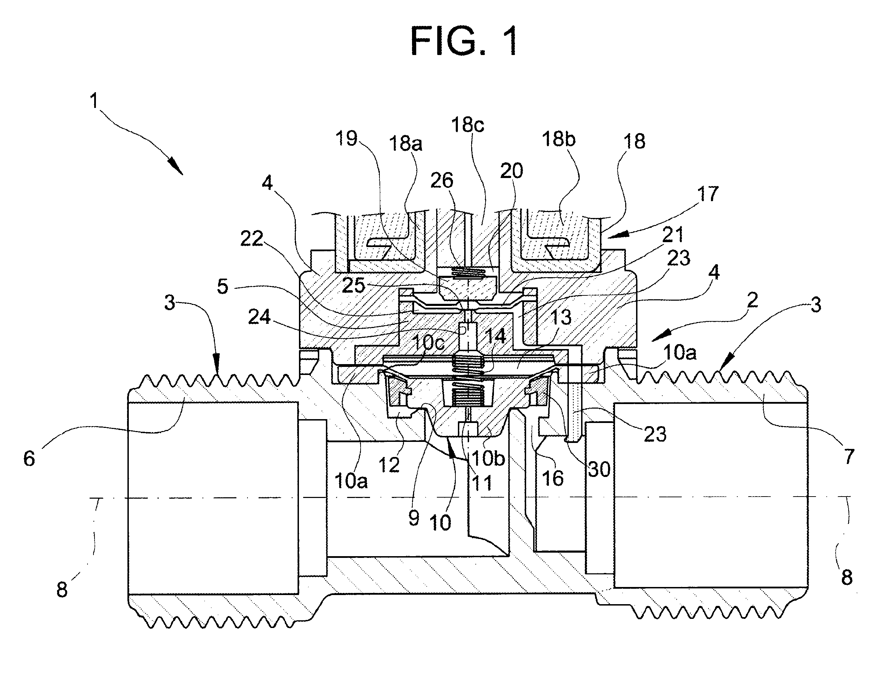

In Figure 1, reference 1 denotes as a whole a valve assembly according to the invention.

This assembly 1 comprises a rigid valve body, denoted 2 as a whole, which in the embodiment illustrated by way of example comprises a main body 3, a reaction body 4, and a shaped intermediate barrier 5. These components of the valve body 2 may for example be plastic mouldings.

The main body 3 forms a tubular inlet port 6 and a tubular outlet port 7. In the example depicted in the drawing these ports are in line on an axis marked 8-8, but this arrangement is not obligatory because the ports 6 and 7 could extend in directions forming an angle with each other.

In the intermediate part of the main body 3 a main valve seat 9 is formed, with which a main obturator 10 is associated. In the embodiment illustrated, this obturator comprises a radially more outward annular part 10a that is gripped between the main body 3, the reaction body 4, and the intermediate barrier 5. The portion 10a of the obturator 10 is joined to an essentially rigid central portion 10b by a flexible intermediate annular portion 10c.

The central portion 10b of the obturator 10 cooperates with the valve seat 9, and in the embodiment illustrated has an axial through hole 11 with a small transverse cross-section.

An annular chamber marked 12 is defined between the main obturator 10 and the portion of the body 3 that surrounds the main valve seat 9.

A first or variable-volume control chamber 13 is defined between the main obturator 10 and the intermediate barrier 5.

The inlet port 6 of the valve assembly 1 is in permanent communication with the control chamber 13, through the passage 11 provided in the obturator 10.

Inside the control chamber 13, between the intermediate barrier 5 and the obturator 10, is a helical spring 14 that tends to keep this obturator normally closed on the valve seat 9.

Mounted rigidly on the main obturator 10 is an opposing ring 30 capable of containing the thrust of the pressure of the fluid acting from the control chamber 13 towards the annular chamber 12, when the valve assembly 1 is in the rest condition.

The annular chamber 12, which is fluidically downstream of the main valve comprising the seat 9 and the associated obturator 10, is in permanent communication with the outlet port 7 through at least one passage marked 16.

Associated with said main valve 9, 10 is a solenoid pilot valve bearing the general reference 17. This solenoid pilot valve comprises a control coil 18, which includes an essentially tubular spool-like support 18a, around which a winding 18b is formed and inside which a stationary ferromagnetic core 18c is arranged.

The solenoid pilot valve 17 also comprises a ferromagnetic core 19 mounted movably in a cavity 20 defined between the stationary core 18c, the reaction body 4, and the intermediate barrier 5.

In the cavity 20, underneath the movable core 19, is an auxiliary diaphragm obturator 21 with its periphery gripped fluid-tightly between the barrier 5 and the body 4.

The auxiliary obturator 21 may conveniently be made for example as a diaphragm of two separate superimposed layers, one of which may be made of an elastomer or the like, and the other of metal or other rigid material, in order to provide dual security of pressure integrity to the outside.

Between the auxiliary obturator 21 and the barrier 5 a second variable volume control chamber 22 is defined. The latter is in permanent communication with the outlet port 7 of the valve assembly 1 through a passage 23 which in the example illustrated lies partly inside the barrier 5, partly inside the body 4 and the portion 10a of the obturator 10, and lastly partly in the main body 3.

A passage 24 is formed in the barrier 5 with a very small transverse cross-section which is however greater than that of the passage 11 through the main obturator 10. This passage 24 extends between the control chambers 13 and 22 and, near the latter, terminates in a valve seat 25 with which the auxiliary obturator 21 is associated.

The passage 24 represents the fluid inlet for the solenoid pilot valve 17, while the passage 23 represents its outlet.

An auxiliary helical spring 26 interposed between the stationary core 18c and the movable core 19 tends to keep said movable core 19 in the position illustrated, where it pushes the auxiliary obturator 21 to close the valve seat 25. In this condition the passage 23 is disconnected from the control chamber 13.

The coil 28 of the solenoid pilot valve is constructed in such a way that when a current flows through its winding 18b, the coil tends to attract the movable core 19 towards the fixed core 18c.

In a normal initial condition or rest condition the main obturator 10 and the auxiliary obturator 21 close the main valve seat 9 and the valve seat 25, respectively. In addition, the coil 18 is not energized by the flow of current.

In this condition, when a pressurized fluid is supplied to the inlet port 6 of the valve unit 1, this fluid arrives in the control chamber 13 via the passage 11 in the main obturator 10, and gradually fills this control chamber 13.

Next, as soon as the coil 18 is energized, the magnetic field which it generates sets up an attraction between the coil 18c and the movable core 19, which is raised.

Following this movement of the movable core 19, the auxiliary obturator 21 is lifted, by the pressure of the fluid in the chamber 13 and in the passage 24. Consequently the valve seat 25 of the passage 24 is opened and the fluid present in the control chamber 13 begins to flow out towards the outlet port 7 of the valve assembly 1, through the second control chamber 22 and the passage 23.

As noted earlier, the passage 24 has a very small transverse cross-section which is greater than that of the passage 11 formed in the obturator 10. Consequently, once the auxiliary obturator 21 has opened the seat 25, the flow of fluid entering into the control chamber 13 is unable to compensate for the flow escaping through the chamber 22 and through the passage 23.

The control chamber 13 now gradually empties, and as a result the pressure of the fluid in its interior gradually diminishes.

The main obturator 10 is now subjected to a pressure of about zero on its surface facing towards the control chamber 13, and to the pressure of the fluid arriving from the inlet port 6 which causes an upward movement of this main obturator 10. The latter then compresses the spring 14 and opens the main valve seat 9.

In this way the fluid arriving from the inlet port 6 is able to flow towards the outlet port 7 via the main valve seat 9, the annular chamber 12 and the passage or passages 16.

Notice that in the valve assembly according to the invention the movable core 19 is located in the cavity 20, away from the path taken by the fluid. The advantage of this solution is that it enables the movable core 19 to be controlled by a coil (18) which may optionally be located even at a distance from the body of the valve assembly 1, and optionally even allows more than one core (and therefore more than one main valve) to be controlled by an electromagnetic device operated by a single coil.

When the coil 18 is de-energized, the auxiliary spring 26 pushes back the movable core 19 and the obturator 21 towards the valve seat 25, closing it again. The fluid from the inlet port 6 once again fills the control chamber 13, and at a certain point the pressure of the fluid in this chamber pushes back the main obturator 10 to engage and close the main valve seat 9. Once this condition is achieved, the outlet port 7 is disconnected from the inlet port 6.

In the illustrated example of an embodiment, the fluid coming from the inlet port 6 arrives at the control chamber 13 via a passage 11 formed in the main obturator 10, and the annular chamber 12 is permanently in communication with the outlet port 7 of the valve assembly.

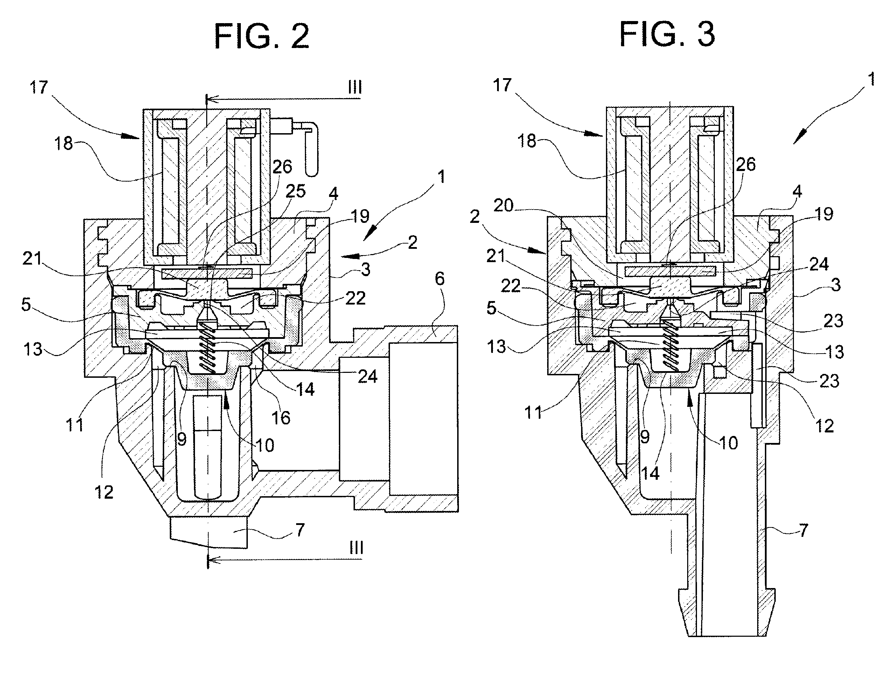

Figures 2 and 3 show another embodiment of a valve assembly according to the invention. In these figures parts identical or essentially equivalent to parts already described have again been given the same reference numbers as used previously.

In the variant shown in Figures 2 and 3 the restricted passage 11 through the main obturator 10 is formed in a portion situated radially outside of the main valve seat 9, and, during operation, fluid from the inlet port 6 arrives in the control chamber 13 after passing through the passage 16, the annular chamber 12 and the restricted passage 11.

In other respects the structure and modus operandi of the valve assembly 1 shown in Figures 2 and 3 correspond essentially to those of the valve assembly shown in Figure 1, and will not therefore be further described.

Naturally, without altering the principle of the invention, the forms of actuation and details of construction may vary considerably from those described and illustrated purely by way of non-restrictive example, without thereby departing from the scope of the invention as defined in the appended claims.

## Claims

1. A valve assembly (1) for controlling the flow of fluid, particularly for washing machines, comprising
a valve body (3-5) with an inlet port (6) and an outlet port (7) for the fluid, between which there is defined a main valve seat (9) intended to cooperate with an associated main obturator (10); said main obturator (10) defining together with the valve body (3-5), a first variable volume control chamber (13) which is in permanent communication with the inlet port (6) through a first passage (11) having a reduced cross-section; said control chamber (13) being adapted to be brought into communication with the outlet port (7) through a second passage (24) having a larger cross-section; and
a solenoid pilot valve (17) including a control coil (18) and a movable core (19) associated with an auxiliary obturator (21) which is adapted to open and close said second passage (24); wherein
in the valve body (3-5) between said second passage (24) and the outlet port (7) there is defined a second variable volume control chamber (22), which is delimited in part by the auxiliary obturator (21), the valve assembly being **characterized in that** the movable core (19) associated with said auxiliary obturator (21) is mounted out of the flow-path of said fluid, in particular outside said second variable volume control chamber (22).

2. A valve assembly according to claim 1, wherein the auxiliary obturator (21) comprises a diaphragm ad an associated protection disc, preferably made of metal material.

3. A valve assembly according to claim 1 or 2, wherein said first passage (11) is provided in the main obturator (10).

4. A valve assembly according to one of the preceding claims, wherein said first passage (11) is provided radially inside the main valve seat (9).

5. A valve assembly according to one of claims 1 to 3, wherein said first passage (11) is provided radially outside said main valve seat (9).

6. A valve assembly according to one of the preceding claims, wherein the main obturator (10) is provided with an annular contrast member (30) adapted to cause a reduction of the thrust exerted onto said main obturator (10) by the fluid contained in said first control chamber (13).

## Patentansprüche

1. Ventilaufbau (1) zum Steuern des Flusses von Fluid, insbesondere für Waschmaschinen, mit
einem Ventilkörper (3-5) mit einer Einlassöffnung (6) und einer Auslassöffnung (7) für das Fluid, zwischen denen ein Hauptventilsitz (9) bestimmt ist, der beabsichtigt ist, mit einer verbundenen Hauptabdichtung (10) zu kooperieren; wobei die Hauptabdichtung (10) zusammen mit dem Ventilkörper (3-5) eine erste variable Volumensteuerungskammer (13) bestimmt, die in ständiger Verbindung mit der Einlassöffnung (6) über einen ersten Durchgang (11) mit einem verringerten Querschnitt ist; wobei die Steuerungskammer (13) angepasst ist, mit der Auslassöffnung (7) über einen zweiten Durchgang (24) mit einem größeren Querschnitt in Verbindung gebracht zu werden; und
einem Solenoidpilotventil (17) mit einer Steuerungsspule (18) und einem beweglichen Kern (19), der mit einer Hilfsabdichtung (21) verbunden ist, das angepasst ist, den zweiten Durchgang (24) zu öffnen und zu schließen; wobei
in dem Ventilkörper (3-5) zwischen dem zweiten Durchgang (24) und der Auslassöffnung (7) eine zweite variable Volumensteuerungskammer (22) definiert ist, die teilweise von der Hilfsabdichtung (21) begrenzt ist, wobei der Ventilaufbau **dadurch gekennzeichnet ist, dass** der bewegliche Kern (19), der mit der Hilfsabdichtung (21) verbunden ist, außerhalb des Fließpfads des Fluids montiert ist, insbesondere außerhalb der zweiten variablen Volumensteuerungskammer (22).

2. Ventilaufbau nach Anspruch 1, wobei die Hilfsabdichtung (21) ein Diaphragma und eine verbundene Schutzscheibe aufweist, vorzugsweise aus einem metallischen Material hergestellt.

3. Ventilaufbau nach Anspruch 1 oder 2, wobei der erste Durchgang (11) in der Hauptabdichtung (10) vorgesehen ist.

4. Ventilaufbau nach einem der vorhergehenden Ansprüche, wobei der erste Durchgang (11) radial innerhalb des Hauptventilsitzes (9) vorgesehen ist.

5. Ventilaufbau nach einem der Ansprüche 1 bis 3, wobei der erste Durchgang (11) radial außerhalb des Hauptventilsitzes (9) vorgesehen ist.

6. Ventilaufbau nach einem der vorhergehenden Ansprüche, wobei die Hauptabdichtung (10) mit einem ringförmigen Kontrastelement (30) vorgesehen ist, das angepasst ist, eine Reduzierung des auf die Hauptabdichtung (10) ausgeübten Drucks durch das in der ersten Steuerungskammer (13) enthaltene Fluid zu bewirken.

## Revendications

1. Ensemble de vanne (1) pour commander l'écoulement d'un fluide, en particulier pour machines à laver, comprenant :
un corps de vanne (3-5) ayant un orifice d'entrée (6) et un orifice de sortie (7) pour le fluide, entre lesquels est défini un siège de vanne principal (9) destiné à coopérer avec un obturateur principal associé (10), ledit obturateur principal (10) définissant avec le corps de vanne (3-5) une première chambre de commande à volume variable (13) qui est en communication permanente avec l'orifice d'entrée (6) par l'intermédiaire d'un premier passage (11) de section réduite ; ladite chambre de commande (13) étant adaptée pour être mise en communication avec l'orifice de sortie (7) par l'intermédiaire d'un deuxième passage (24) de section plus grande ; et
une électrovanne pilote (17) comprenant une bobine de commande (18) et un noyau mobile (19) associé à un obturateur auxiliaire (21) qui est adapté pour ouvrir et fermer ledit deuxième passage (24) ; dans lequel
il est défini, dans le corps de vanne (3-5), entre ledit deuxième passage (24) et l'orifice de sortie (7), une deuxième chambre de commande à volume variable (22), qui est délimitée en partie par l'obturateur auxiliaire (21), l'ensemble de vanne étant **caractérisé en ce que** le noyau mobile (19) associé audit obturateur auxiliaire (21) est monté en dehors du chemin d'écoulement dudit fluide, en particulier à l'extérieur de ladite deuxième chambre de commande à volume variable (22).

2. Ensemble de vanne selon la revendication 1, dans lequel l'obturateur auxiliaire (21) comprend un diaphragme et un disque de protection associé, de préférence fait d'un matériau métallique.

3. Ensemble de vanne selon la revendication 1 ou 2, dans lequel ledit premier passage (11) est prévu dans l'obturateur principal (10).

4. Ensemble de vanne selon l'une des revendications précédentes, dans lequel ledit premier passage (11) est prévu radialement à l'intérieur du siège de vanne principal (9).

5. Ensemble de vanne selon l'une des revendications 1 à 3, dans lequel ledit premier passage (11) est prévu radialement à l'extérieur dudit siège de vanne principal (9).

6. Ensemble de vanne selon l'une des revendications précédentes, dans lequel l'obturateur principal (10) est pourvu d'un élément de contraste annulaire (30) adapté pour provoquer une réduction de la poussée exercée sur ledit obturateur principal (10) par le fluide contenu dans ladite première chambre de commande (13).
